# EUROPEAN PATENT APPLICATION

(11) **EP 4 786 071 A1**
(43) Date of publication of application: **05.08.2026**
(21) Application number: 25155044.8
(22) Date of filing: 30.01.2025
(51) Int. Cl.: B21J 15/02, B21J 15/32, B23P 19/00

(54) **DEVICE AND METHOD FOR SEPARATING JOINING ELEMENTS AND AN ASSEMBLY COMPRISING A SEPARATING DEVICE**

(71) Applicant: Newfrey LLC, New Britain, CT 06053 (US)
(72) Inventor: Kohlstaedt, Timo, 35394 Gießen (DE); Lippert, Stefan, 35394 Gießen (DE)
(74) Representative: Haarpatent Patentanwälte Krämer Meyer

(57) **Abstract**

A separating device (1) for separating joining elements (33) is provided, comprising a housing (2) having an opening (7) and an outlet (9), and the housing (2) including a first and a second sliding element (14, 15) adapted to be in a start position and an end position. The first sliding element (14) comprises a recess (17) into which a clamping element (20) of the second sliding element (14) projects. A channel-forming side wall (23) of the clamping element (20) and a channel-forming side wall (22) of the recess (17) form a channel (24), of which at least the upper part, in the start position of the sliding elements (14, 15), is accessible for joining elements (33) via the opening (7) in the housing (2). The sliding elements (14, 15) can be operatively connected to an actuator, such as a linear drive (12), so that the sliding elements (14, 15) can be moved by a linear movement of the linear drive (12) in a relative movement to the housing (2) from their start position into their end positions, in which the channel (24) is positioned above the outlet (9), wherein a joining element (33) is movable through the channel (24) into the outlet (9).

## Description

The invention relates to a separating device with two sliding elements that define a channel into which a joining element can be received, wherein the sliding elements can be moved from a start position into an end position. Furthermore, the invention relates to an arrangement comprising a separating device, a processing device for processing the joining elements separated by the separating device, and a feeding device for feeding a plurality of joining elements to the separating device. Furthermore, the invention relates to a method for separating joining elements.

The automatic, machine-based processing of joining elements, such as the setting of rivets, the fastening of screws or the welding of studs, requires a fast and reliable feeding of the joining elements to the processing device. Any disruption of the feeding process will delay the production process and may also result in costly maintenance work.

EP 0 922 538 B1 describes a method in which a joining element in the form of a self-piercing rivet with a head and a shaft offset from the head is fed by a feeding device through a conveying channel of a loading device arranged on the self-piercing riveting device. The conveying channel has a T-shaped cross-section, which essentially corresponds to the projection area of the self-piercing rivet. The self-piercing rivets are fed to the feed channel with their longitudinal axis perpendicular to the feed direction and transported individually through the feed channel to the loading device by means of air. In the loading device, the supplied self-piercing rivet is decelerated and held in a start position suitable for the processing procedure by means of movable positioning segments and a blocking element. This method and the devices known from the aforementioned document have proven themselves in practice. However, the time required for the direct individual feeding of the joining elements by the feeding device has proven to be disadvantageous for fast work cycles and long transmission paths due to the application.

EP 0 511 093 B1 discloses a method for conditioning and dispensing cylindrical small parts, such as screws or rivets, the small parts are arranged in the same direction with the shaft facing forward in a column in a cylindrical supply tube, which is provided at the top with an opening for the supply of parts and with a compressed air inlet and at the bottom with an outlet that is connected to a device for intermittent delivery of the parts. The cylindrical tube is arranged in several coils inside a rigid container and forms a magazine in which a large number of parts are stored. The inner diameter of the tube is larger than the largest diameter of the parts in a certain ratio, so that an air flow can flow through the tube along the parts to the outlet. This well-known method has the disadvantage that it requires a comparatively large space near the processing device. Furthermore, the energy required to transport the parts is relatively high because the entire column of many parts has to be moved each time a part is dispensed. It is not easily possible to switch between parts of different lengths at short notice.

A device for feeding rivets to a punch riveter is known from DE 100 64 241 A1. In this known device, the rivets are lined up individually one behind the other in a tubular magazine, which is pressurized and dimensioned in such a way that a small stream of compressed air can flow past the rivets towards the front end of the magazine. At the front end of the magazine is a device for rivet separation and rivet transfer, consisting of a slide with a rivet receptacle opening, which can be moved back and forth at right angles to the main extension of the magazine between a first position for receiving a rivet from the magazine and a second position for releasing the received rivet to the punching and riveting pliers. To remove the rivet from the rivet receiving opening of the slide, compressed air is applied to the second position of the slide, causing the rivet to be transported into a rivet receiving opening of the punching riveting pliers, where it is held by a vacuum generated at the front end of the rivet punch via a bore that penetrates the rivet punch. After the rivet transfer, the tubular magazine and the device for rivet separation and rivet transfer are swung out of the rivet transfer position into a riveting position in which the head of the punching riveting pliers is exposed. This well-known device is complex. It is not possible to switch between two rivet variants at short notice.

US 2004/0022588 A1 relates to both a method and a device for feeding fastening elements with a first and a second end, in particular rivets, preferably blind rivets, wherein a fastening element is transported to a junction point at a given orientation by a feed channel, and leaves the junction point preferably with the first end in front via a first channel or with the second end in front via a second channel.

The problem with the known devices and methods is that a high level of technical effort is required to separate the joining elements, especially since the known devices are prone to error due to their complexity and cannot be used for different joining elements.

The object of the invention is to provide a simply constructed device or a simply realizable method that does not have the disadvantages of the prior art and that can be used universally.

The above-mentioned object is achieved by the invention defined in independent claim 1 and by the method according to claim 14. Preferred embodiments are described in the dependent claims.

A separating device for separating joining elements is provided, comprising a housing having an opening and an outlet, and the housing including a first and a second sliding element movable between a start position and an end position,
wherein the first sliding element comprises a recess into which a clamping element of the second sliding element projects,
wherein a channel-forming side wall of the clamping element and a channel-forming side wall of the recess form a channel, of which at least the upper part, in the start positions of the first and second sliding elements, is accessible for joining elements via the opening in the housing,
wherein the sliding elements can be operatively connected to an actuator, so that the first and/or second sliding elements can be moved by a linear movement of the actuator in a relative movement to the housing between the start position and the end position,
wherein in the end positions of the first and second sliding elements, the channel is positioned above the outlet, such that a joining element is movable through the channel into the outlet.

The separating device according to the invention allows for the simple and fast separation of joining elements. For the purposes of the invention, joining elements may include, for example, but are not limited to, rivets, screws, studs, pins and the like. The separating device includes, in particular, a channel formed by the two sliding elements, wherein the channel is positioned above the outlet and a joining element is moveable into the channel. This enables the automatic release of the separated joining element. In a preferred embodiment, the width of channel is increased when the channel is positioned above the outlet, that is, the width of the channel can be greater in the preferred design in the end position of the first and second sliding elements than in the start positions.

Furthermore, the separating device can be used to separate a variety of joining elements with different geometries, without the need for extensive technical modifications to the separating device. Another advantage of the separating device is that it can be easily connected to a processing device for joining elements. Existing processing devices can be retrofitted with the separating device without the need for costly modifications to the processing device. The lid, which is preferably designed to be removable, makes it easy to maintain the separating device.

For the purposes of the invention, the actuator can, for example, be designed as a linear drive.

In one embodiment, the separating device comprises an elastic resilient element arranged between the first and second sliding elements, a first end of the resilient element being supported on the first sliding element and a second end being supported on the second sliding element. This can be used to absorb the relative movement of the two sliding elements in relation to each other. The resilient element can, for example, be designed as a compression spring, in particular a spiral compression spring. However, it can also be provided an elastic resilient element which, for example, connects the two sliding elements to each other and simultaneously has elastic material properties.

The linear drive moves both sliding elements to their end positions. It is particularly preferred that the second sliding element rests against an axial stop in the housing in its end position. The axial stop can be formed, for example, by an inner surface of a housing wall. Damping means can be provided to prevent the second sliding element from striking the housing with excessive force. Such damping means can, for example, be present as spring-loaded pins in the housing and designed for contact with the second sliding element.

In one embodiment, the free end of the first sliding element extends beyond the free end of the second sliding element. The free ends denote the ends of the sliding elements that are opposite to the linear drive, i.e. are not oriented towards the narrow side of the housing into which the linear drive engages.

In one embodiment it is preferred, that the second sliding element is in an intermediate position when the first sliding element is in its end position. In the intermediate position, the first sliding element has not yet reached its end position. Advantageously, the first sliding element can be moved out of its intermediate position, in particular against the resilient force of the resilient element, into its end position in a relative movement to the second sliding element. In this preferred embodiment, the fact that the first sliding element can be moved with respect to the second sliding element and the second sliding element is already mounted in its end position makes it possible to change the distance between the channel-forming side walls, in particular to increase it. This advantageous effect can also be achieved by other means. For example, the first sliding element can be fixed axially in an end position and the second sliding element can be moved with respect to the first.

One embodiment provides for the first sliding element to be operatively connected to the linear drive, so that the first sliding element and the second sliding element can be moved from their start positions to their end positions by a linear movement of the linear drive in a relative movement to the housing. The linear drive can, for example, be designed as a pneumatic actuator, in which, for example, a piston of the actuator is connected to the first sliding element in a motion-transmitting manner. For the design in which the first sliding element is connected to the second sliding element in a motion-transmitting manner, the linear drive can be used to move both sliding elements in the axial direction in the housing.

Furthermore, the separating device can comprise a further linear drive that is connected to the second sliding element in a motion-transmitting manner, so that the sliding elements can be moved from their end positions to their start positions by a linear movement of the second linear drive. Such an additional linear drive can, for example, engage in the housing from the narrow side opposite the first linear drive. This would allow both sliding elements to be moved linearly in the housing in a controlled manner. At least one of the linear drives, advantageously both linear drives, is connected to a control device in a data-exchangeable manner. In one embodiment, for example, the sliding elements can be moved from their start positions to their end positions by a controlled movement, with one of the two sliding elements, for example, reaching its end position before the second sliding element, thereby achieving a controlled intermediate position. In a subsequent relative movement initiated by the linear drive, the second sliding element can be moved into its end position in relation to the first sliding element. This preferred embodiment also allows the channel width to be increased in the end positions in relation to the start positions.

In order to achieve guidance of the second sliding element with the first sliding element, in one embodiment the second sliding element can have a through-bore through which a guide element can be guided that is axially mounted in the first sliding element. The guide element may, for example, be configured as a guide screw that engages in particular in a thread provided in the first sliding element. In one embodiment, the resilient element may be configured as a spiral compression spring around the guide element. In another embodiment, the guide element itself may be configured to be elastic. In this embodiment, the elastic resilient element is not required.

In order to support the movement of a separated joining element out of the separating device, in one embodiment there may be a borehole in the lid of the housing coaxial with the outlet for connecting a compressed air source. Compressed air can be introduced into the housing, or more precisely through the borehole in the lid, via the compressed air source. In one embodiment, the compressed air can be introduced into the channel in this way. In another embodiment, the first sliding element can have a bore coaxial with the compressed air inlet and outlet when the sliding elements are in their start position. The compressed air supply then causes a separated joining element that has already fallen out of the channel into the outlet to be conveyed to a downstream processing device.

The joining elements enter the upper part of the channel from the opening. To help position them here, it is proposed that the channel-forming side walls of the recess and the clamping element each have a bevel at their ends near the lid, running radially to the longitudinal axis of the channel and forming a cone. This can help to create a stable receptacle in the channel, especially for joining elements with a flange-like head.

A feeding device for feeding joining elements can be connected to the separating device via a transport element. Such transport elements may, for example, be designed as a rail via which the joining elements are presented one behind the other to the separating device. It has proven advantageous that a side wall of the clamping element, which runs perpendicular to the channel-forming side wall of the clamping element and points towards the lid, has a beveled edge pointing towards the opening. This prevents the joining elements from piling up or standing up.

The invention also relates to an arrangement comprising a separating device, a processing device for processing the joining elements separated by the separating device, and a feeding device for feeding a plurality of joining elements to the separating device, wherein the separating device, processing device and feeding device are connected to one another via transport elements for transporting the joining elements. The arrangement makes it possible to feed joining elements individually to a processing device. A processing device may be, for example, a setting tool that uses joining elements, in particular rivets or blind rivets, to join structural components. In all other respects, reference is made to the advantages and designs of the separating device, which are to be applied analogously to the arrangement.

The arrangement can comprise a linear drive connected to at least one sliding element, which causes a linear movement of at least one sliding element. In another embodiment, a further linear drive can be provided.

It has proven advantageous when the opening of the separating device extends over the height of a side wall and into a bottom of the housing, so that there is no bottom in the housing below a transport element coming from the feeding device and opening into the opening. This allows dirt or the like to fall out through the opening and not cause damage to the separating device.

The invention further concerns a method for separating joining elements, in which
a first and a second sliding element form a channel, of which at least an upper part is accessible via an opening for joining elements in start positions of the sliding elements,
several joining elements arranged one behind the other are presented at the opening,
a joining element is moved into the upper part of the channel,
both sliding elements are moved from their start positions in a linear motion to their end positions, in which the channel is positioned above an outlet, so that the joining element falls through the channel into the outlet. The method enables efficient separation of the joining elements. In particular, the method can be carried out by a separating device. The advantages and designs of the separating device described are similarly applicable to the method.

It has proven to be advantageous to blow compressed air into the channel when the sliding elements are in the start position. This can accelerate the further conveying of the separated joining element.

The invention will be explained in more detail below, with reference to an example of the invention shown in the drawing. It shows
- Figure 1: an exploded view of a separating device with a linear drive and a feeding device,
- Figure 2: a schematic top view of an opened separating device with sliding elements in the start position,
- Figure 3: a sectional view along A-A of Figure 2,
- Figure 4: a sectional view according to B-B of Figure 2,
- Figure 5: a schematic top view of an opened separating device with the second sliding element in the end position and the first sliding element in its intermediate position,
- Figure 6: a sectional view along A-A of Figure 5,
- Figure 7: a sectional view according to B-B of Figure 5,
- Figure 8: a schematic top view of an opened separating device with both sliding elements in the end position,
- Figure 9: a sectional view along A-A of Figure 8 and
- Figure 10: a sectional view along B-B of Figure 8.

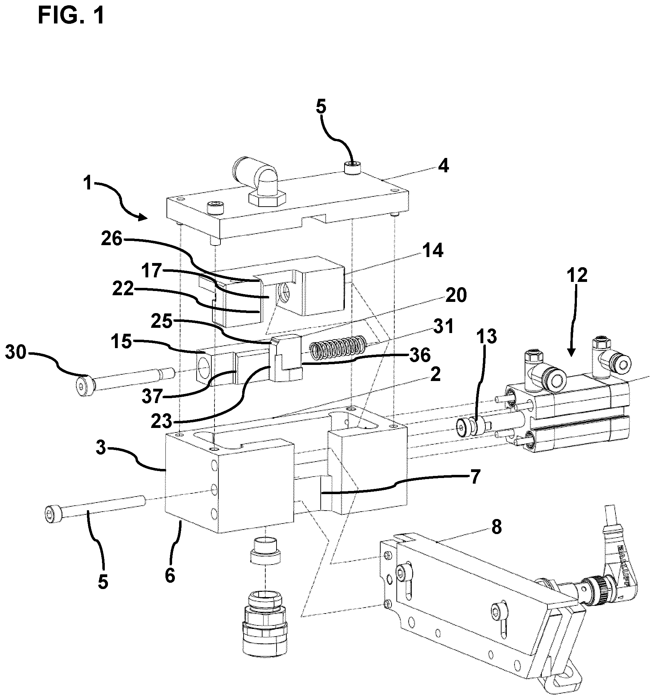

A preferred separating device is explained with reference to figures 1-4. The separating device 1 comprises a housing 2 which, in the embodiment shown, comprises a basically rectangular base body 3 with a lid 4. The housing 2 may be made of metal, plastic, or a combination thereof. The base body 3 delimits a cavity present in the housing 2. The lid 4 can be reversibly attached to the base body 3 by means of fastening means 5, for example screws. Corresponding bores can be provided in the base body 3 for this purpose. The base body 3 is formed by two opposing narrow sides, two opposing long sides and a bottom 6. In the design shown, the base body 3 is made in one piece. However, it may also be advantageous to produce the base body 3 from several parts that can be connected to one another. The top of the base body 3 is open and is closed by the lid 4. One side wall of the base body 3, in particular one longitudinal side, has an opening 7, which in the illustrated design is a rectangular opening 7 running perpendicular to the longitudinal axis of the base body 3. The shape and design of opening 7 can, of course, vary depending on the application. For example, a feeding device feed can be attached in opening 7. In the illustrated design, a rail of the feeding device can be seen, which can be attached in the opening using a screw. The rail can be referred to as a transport element 8 for the purposes of the invention.

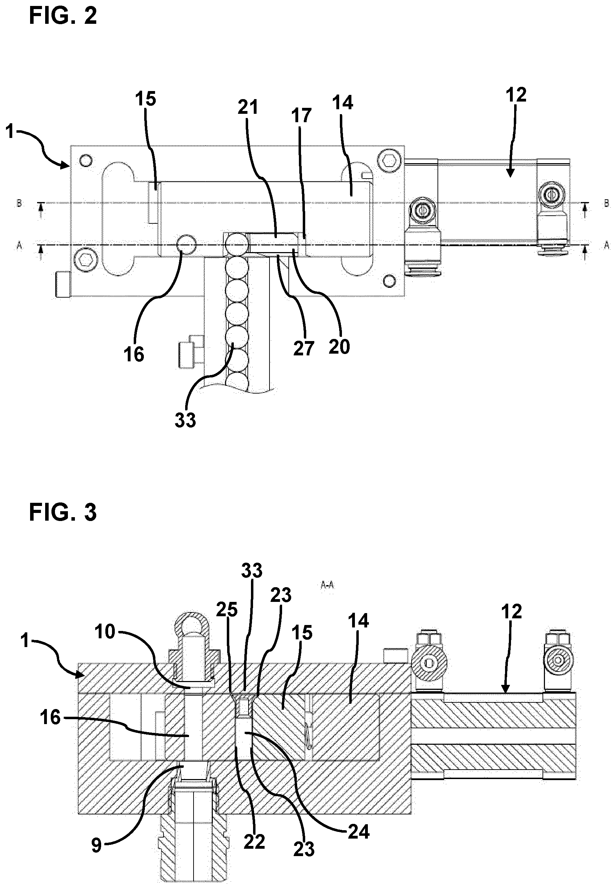

An outlet 9, which can be provided as a borehole, is located in the bottom 6 of the base body 3 and can be seen in figure 3. The outlet 9 forms a passage and can lead to a processing device that is not shown. A corresponding connection and transport elements 8 between the outlet 9 of the separating device 1 and the processing device can be provided.

A connection bore 10 is integrated in the lid 4, essentially coaxial with the outlet 9, which is designed to connect a compressed air source, in particular a controllable compressed air source. A person skilled in the art is familiar with corresponding connections that can be inserted into the connection bore 10.

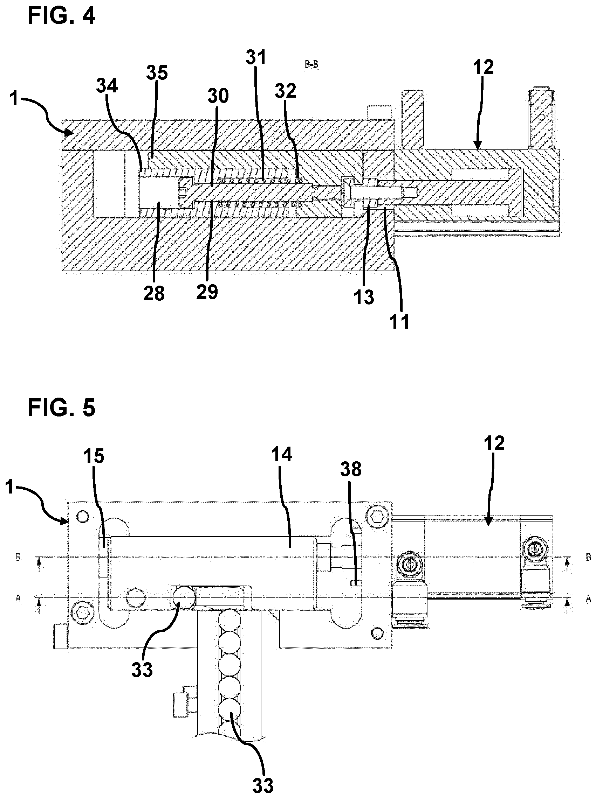

In one narrow side of the base body 3, a further bore 11 is provided, which can be seen in figure 4, and through which a driving part of an actuator, such as a linear drive 12 can be guided into the housing 2. In the embodiment shown, the linear drive 12 is designed as a lifting cylinder, in which an actuating element 13 in the form of a cylinder piston is guided through the borehole 11. The lifting cylinder can, for example, be designed as a pneumatic or hydraulic lifting cylinder. However, it may also be intended to provide an electrically driven actuator instead of a lifting cylinder, in which an actuating element 13 is guided through the borehole 11 into the housing 2.

Two sliding elements 14, 15 are present in the housing 2, namely a first 14 and a second sliding element 15. The first sliding element 14 has a rectangular basic shape formed by two cube-shaped parts that are connected to each other by a bar. One of the cube-shaped parts is only formed up to halfway, and is therefore narrower than the other cube-shaped part. The cube- shaped part shown in figure 1 on the left side is penetrated by a compressed air bore 16 that runs transversely to the longitudinal axis of the first sliding element 14. The two cubes flank a recess 17 that extends across the entire width and height of the first sliding element 14 and ends in the bar. The first sliding element 14, or more precisely one of the two cube-like parts, has on one side a connecting bore 18 for an actuating element 13, which can be seen in figure 4 and is arranged to correspond with the bore 11 located in the narrow side of the housing 2. The actuating element 13 of the linear drive 12 is guided through the housing 2 and engages in the first sliding element 14 in a motion-transmitting manner. In the embodiment shown, a lifting cylinder is shown as the linear drive 12, wherein a cylinder piston is guided as the actuating element 13 through the borehole 11 in the narrow side of the housing 2 and is axially mounted in the first sliding element 14. In order to transfer a translational motion of the linear drive 12 to the first sliding element 14, a corresponding bearing is provided in the first sliding element 14. In the example shown, a fastening screw 19 is guided through the first sliding element 14 into the actuating element 13, where it interacts with a thread. The fastening screw 19 is axially secured in a hollow space of the first sliding element 14.

The second sliding element 15 has a rectangular shape and is designed so that it can be placed between the cubes of the first sliding element 14 and below its bar. A clamping element 20, which is also rectangular in shape and whose upper side surface 21 extends beyond the side surface of the rectangular base shape of the second sliding element 15, extends from the rectangular base shape. The sliding elements 14, 15 can be made of metal, plastic or a combination of both.

When the sliding elements 14, 15 are brought together, the clamping element 20 extends into the recess 17 of the first sliding element 14. One side surface 22 of the recess 17, in the illustrated embodiment the left side surface, is located opposite a side surface 23 of the clamping element 20 and forms a channel 24. The channel 24 is thus formed by a channel-forming side surface 22 of the recess 17 and a channel-forming side surface 23 of the clamping element 20. The width of channel 24 can vary depending on the axial position of the clamping element 20 in the recess 17. Each channel-forming side surface 22, 23 has an upper end and a lower end, the lower end being arranged close to the bottom 6 of the housing 2 and the upper end being arranged close to the lid 4 of the housing 2. The end 25 of the clamping element 20 near the lid and the end 26 of the recess 17 of the channel-forming side surfaces 22, 23 near the lid are bevelled radially to the longitudinal axis of the channel 24, so that the ends 25, 26 near the lid of the channel-forming side surfaces 22, 23 together form a cone. Furthermore, one side wall 21 of the clamping element 20, which is perpendicular to the channel-forming side wall 23 and points towards the lid 4, has a bevelled edge 27. The bevelled edge 27 points towards the opening 7.

A through-bore 28 passes through the rectangular base form of the second sliding element 15 in its longitudinal direction. The through-bore is formed by two bores that are connected by a narrowing 29, which has a smaller diameter than the flanking bores. The through-bore 28 itself is passed through by a guide element 30, in this case a guide screw. The head of the guide screw designed as a guide element 30 can be brought to stop near a shoulder of the through-bore 28, which is formed by the narrowing 29. The screw tip of the guide screw designed as a guide element 30 engages in a thread provided in a bore in the first sliding element 14. The length of the guide screw designed as a guide element 30 is such that an axial movement of the second sliding element 15 relative to the first sliding element 14 is possible. The two sliding elements 14, 15 are connected to one another by the guide element 30, whereby a relative movement of the sliding elements 14, 15 to one another is possible. The connection of the sliding elements 14, 15, which allows movement and is guided, can also be realized by other technical means, for example by a guide pin, a fixed connection that has elastic properties, or the like. Furthermore, it may be designed so that the sliding elements 14, 15 are not connected to each other.

A resilient spring element 31 is arranged around the guide element 30 and is designed as a spiral compression spring in the embodiment shown. The resilient element 31 engages around the guide element 30 in the through-bore 28 of the second sliding element 15 and is supported with one end on a shoulder of the narrowing 29 and with an opposite end on an annular groove 32 provided in the first sliding element 14. The annular groove 32 is arranged around the bore in which the guide element 30 engages. When the resilient element 31 is in its relaxed state, the distance between the sliding elements 14, 15 is essentially at a maximum. In contrast, axial movement of at least one of the sliding elements 14, 15 in the direction of the other sliding element 14, 15 causes the resilient element 31 to be compressed until the second sliding element 15 essentially strikes axially against an end face of the first sliding element 14. The person skilled in the art will be aware that the design of resilient element 31 influences the force required to move sliding elements 14, 15 towards each other. Examples of ways of influencing the force include geometric changes or the choice of material.

In the design shown, the first and second sliding elements 14, 15 are connected to one another via the guide element 30, in particular the guide screw, so that both sliding elements 14, 15 can be moved relative to the housing 2 with the help of the linear drive 12. In a further embodiment, the connection of the sliding elements 14, 15 by means of a guide element 30 can also be dispensed with. It may be provided in a design not shown that both sliding elements 14, 15 can be moved by linear drives 12 that can be moved in opposite directions. This means that a linear drive 12 acting on the first sliding element 14 moves both sliding elements 14, 15 in one direction in the housing 2 and a second linear drive 12, which is operatively connected to the second sliding element 15, moves both sliding elements 14, 15 in the opposite direction. Alternatively, a sliding element 14, 15 can be moved back and forth by a linear drive 12 from a start position to an end position.

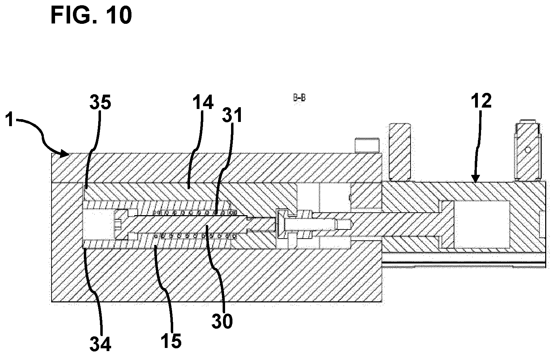

In the following, a separating of joining elements 33 with the help of a preferred separating device 1 is to be described with the help of figures 2-10. A feeding device, which is not shown, positions joining elements 33 at the opening 7 of the housing 2 by means of a transport element 8. The transport element 8 can, for example, be a rail-like construction. The joining elements 33 can be, for example, but are not limited to, screws, rivets, blind rivet nuts or the like. In the embodiment shown, the joining elements are rivets with a head-like flange.

The joining elements 33 are presented in series and one after the other. The sliding elements 14, 15 are in their start position, in which at least part of the channel 24 is accessible via the opening 7. Channel 24 is in a loading position in the sense of the invention. The joining element 33 arranged closest to channel 24 is moved into channel 24 by a forward movement of the following joining elements 33. Alternatively, the transport element 8 can be arranged in such a way that the joining element 33 essentially falls through the opening 7 into the channel 24 under the effect of the force of gravity acting on it. The joining element 33 comes to rest in the upper part of the channel 24 and is held there by the cone formed by the channel-forming side walls 22, 23 of the recess 17 and of the clamping element 20. The flange of the joining element 33 fits into the cone of the side walls 22, 23 and does not fall through the channel 24 towards the housing base 6. Figure 3 shows how the joining element 33 is held in position in the channel 24. Furthermore, figure 3 shows that the connection bore 10 in the lid 4 for connecting a compressed air source, the compressed air bore 16 in the first sliding element 14 and the outlet 9 in the bottom 6 of the housing 2 for connecting a transport element 8 in the start position of the sliding elements 14, 15 are aligned coaxially to one another.

Alternative designs to the cone are possible to prevent the captured joining element 33 from moving towards the bottom 6. For example, the upper part of the channel 24 can be conical and thus have a greater width than the adjoining lower part of the channel 24. The joining element 33 thereby remains only in the upper conical part of the channel 24.

After the joining element 33 has been received in the channel 24, a linear movement initiated by the linear drive 12 takes place, so that both sliding elements 14, 15 together with the joining element 33 received in the channel 24 are moved axially. As already described, the linear drive 12 engages with the first sliding element 14 in the configuration shown, whereby the optional connection between the first and second sliding elements 14, 15 also causes the second sliding element 15 to undergo a linear movement.

As can be clearly seen in figure 5, the clamping element 20 prevents the subsequent joining element 33 from penetrating into the opening 7. Nevertheless, the joining element 33 can already move in the direction of the clamping element 20 and lie against the bevelled edge 27 of the clamping element 20. This prevents the joining elements 33 from moving upwards when they are separated. This prevents the joining elements 33 from jamming in the transport element 8. The joining element 33, which is leaning against the bevelled edge 27, essentially falls into the channel 24 as soon as the channel is back in the start position. This prevents the following joining elements 33 from accumulating.

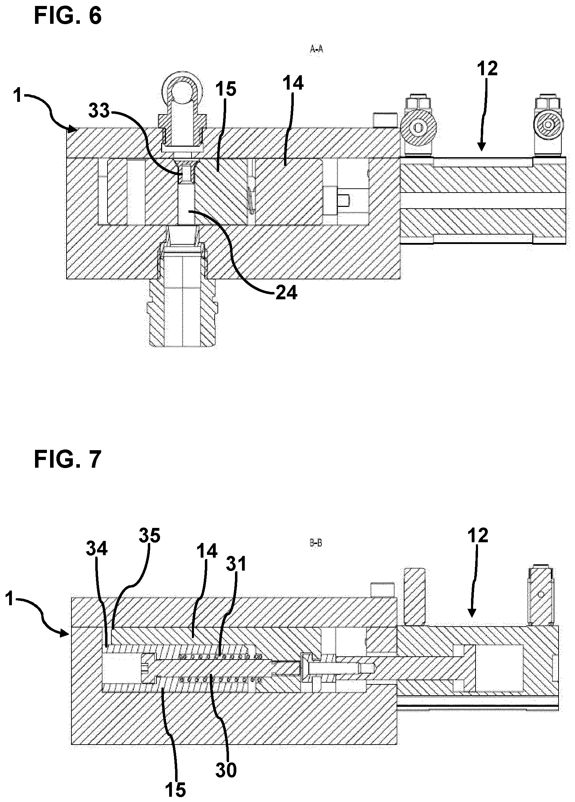

As illustrated in figure 6, the channel 24 is positioned above the outlet 9 by the axial movement of the linear drive 12. A transport element 8, e.g. a hose, a rail or the like, can be connected to the outlet 9 in the housing 2 and can lead to a processing device not shown. The processing device can be, for example, a setting device for rivets.

The joining element 33 cannot fall out of the channel 24 during the movement of the sliding elements 14, 15 from the start position towards the end position because the joining element 33 is prevented from entering the channel 24.

As can be clearly seen in figure 7, the second sliding element 15 is brought by the linear motion of the linear drive 12 into its end position, in which it strikes with its free end 24 against a stop formed by a housing wall. In this position, the second sliding element 15 is in its end position, the first sliding element 14 is in an intermediate position, the channel 24 is positioned above the outlet 9, but the joining element 33 cannot yet move in the direction of the outlet 9.

Furthermore, it can be seen in figure 7 that the free end 35 of the first sliding element 14 is designed to be shorter than the free end 34 of the second sliding element 15, i.e. the free end 34 of the second sliding element 15 extends beyond the free end 35 of the first sliding element 14. Thus, although the free end 34 of the second sliding element 15 strikes axially against the housing wall, the free end 25 of the first sliding element 14 does not yet strike. The first sliding element 14 is in an intermediate position between its start position and its end position, with the second sliding element 15 already in its end position.

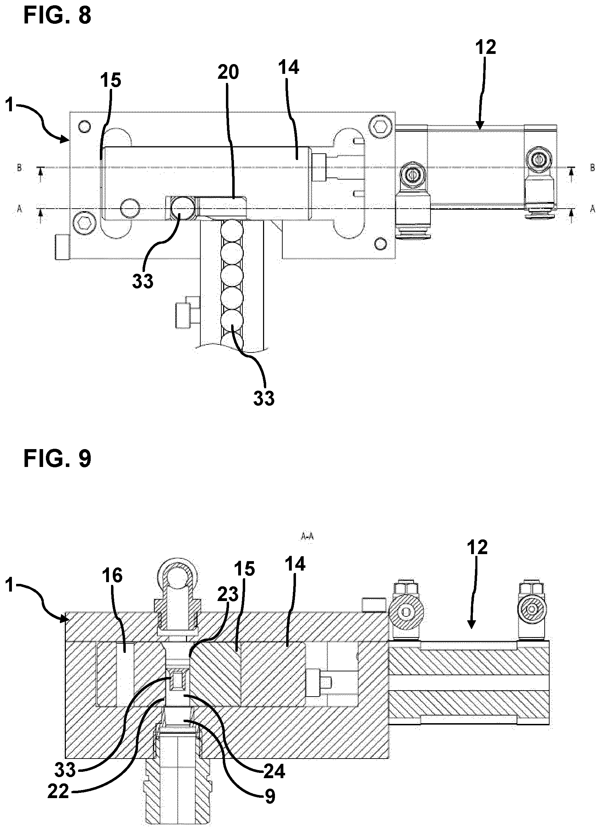

The first sliding element 14 can thus be moved a little further in the direction of the housing wall forming the stop than the second sliding element 15 in order to reach its end position. Due to the guide means 30, a limited relative movement of the first sliding element 14 with respect to the second sliding 15 element is possible. This relative movement is damped by the spring element 31 arranged between the sliding elements 14, 15. This means that the first sliding element 14 can be moved out of its intermediate position into its end position by the force of the linear drive 12 acting on the first sliding element 14 against the resilient force of the resilient element 31 and in a relative movement to the second sliding element 15. The first sliding element 14 reaches its end position after compression of the resilient element 31, which is illustrated in figures 8-10. This can be defined, for example, by the second sliding element 15 striking one end against a surface of the first sliding element 14. Furthermore, a wall of the housing 2 can also form an axial stop for the first sliding element 14. In one embodiment, the clamping element 20 can be provided with an axial stop surface 36, which can be seen in Figure 1, which comes into operative contact with a corresponding surface on the first sliding element 14 when both sliding elements 14, 15 reach their end positions. This can limit the movement of the sliding elements 14, 15 in relation to each other.

The distance between the channel-forming side walls 22, 23 increases as a result of the relative movement of the first sliding element 14 to the second sliding element 15 when the first sliding element 14 moves into its end position. The width of the channel 24 is thus greater in the end positions of both sliding elements 14, 15 than in their start positions. In the context of the invention, the channel 24 is in its discharge position when the channel 24 is released and the joining element 33 can fall through the channel 24 into the outlet 9.

Afterwards, the sliding elements 14, 15 are moved back to their start positions by the linear drive 12. The next joining element 33 to be separated is already pre-positioned by the bevelled edge 27 of the clamping element 20 and falls into the channel 24 as soon as the sliding elements 14, 15 are in their start position, i.e. at least one part of the channel 24 is accessible via the opening 7. It may be provided that the second sliding element 15 has an axial stop surface 37, which can be seen in Figure 1, that comes into operative contact with a corresponding surface on the first sliding element 14 when both sliding elements 14, 15 reach their start positions. The axial stop face 37 can limit the axial mobility of the sliding elements 14, 15 relative to one another. This also prevents the sliding elements 14, 15 from striking one another unintentionally.

Compressed air can be used to facilitate the transportation of the joining element 33 that has been brought out. The compressed air source connected to the housing 2 can feed compressed air through the compressed air bore 16 provided in the first sliding element 14, which, in the start position of the sliding elements 14, 15, opens into the outlet 9 in the bottom 6 of the housing 2. This allows the joining element 33 to be efficiently fed to a downstream processing device.

Furthermore, damping means 38 can be provided in the housing 2, which dampen a striking of the sliding elements 14, 15 on the housing 2. These can be, for example, pressure springs that project from the narrow sides of the housing 2. Alternatively, spring-loaded pins can be provided in the narrow sides of the housing 2.

The separating device according to the invention can be used to separate joining elements in a simple but efficient manner. The separating device can be adapted to the separation of various joining elements of different geometries by simple adjustments. For example, the width of the channel can be adjusted by the design of the guide element.

## Claims

1. Separating device (1) for separating joining elements (33), comprising a housing (2) having an opening (7) and an outlet (9), and the housing (2) including a first and a second sliding element (14, 15) movable between a start position and an end position,
wherein the first sliding element (14) comprises a recess (17) into which a clamping element (20) of the second sliding element (14) projects, wherein a channel-forming side wall (23) of the clamping element (20) and a channel-forming side wall (22) of the recess (17) form a channel (24), of which at least the upper part, in the start positions of the first and second sliding elements (14, 15), is accessible for joining elements (33) via the opening (7) in the housing (2),
wherein the sliding elements (14, 15) can be operatively connected to an actuator (12), so that the first and/or second sliding elements (14, 15) can be moved by a linear movement of the actuator (12) in a relative movement to the housing (2) between the start position and the end position,
wherein in the end positions of the first and second sliding elements, the channel (24) is positioned above the outlet (9) such that a joining element (33) is movable through the channel (24) into the outlet (9).

2. Separating device (1) according to claim 1, further comprising an elastic resilient element (31) which is arranged between the first and second sliding elements (14, 15), a first end of the resilient element (31) being supported on the first sliding element (14) and a second end being supported on the second sliding element (15).

3. Separating device (1) according to claim 1 or 2, **characterized in that** the second sliding element (15) bears against an axial stop in the housing (2) in its end position.

4. Separating device (1) according to one of the preceding claims, **characterized in that** the second sliding element (15) is in an intermediate position when the first sliding element (14) is in its end position.

5. Separating device (1) according to claim 4, **characterized in that** the first sliding element (14) can be moved out of its intermediate position into its end position against a resilient force of the resilient element (31) in a movement relative to the second sliding element (15).

6. Separating device (1) according to one of the preceding claims, **characterized in that** the first sliding element (14) is operatively connected to the actuator (12) so that the first sliding element (14) and the second sliding element (15) can be moved out of their start positions and into their end positions by a linear movement of the actuator (12) in a relative movement to the housing (2).

7. Separating device (1) according to one of the preceding claims, **characterized in that** the second sliding element (15) has a through-bore (28) through which a guide means (30) can be guided, which is axially mounted in the first sliding element (14).

8. Separating device (1) according to one of the preceding claims, **characterized in that** a borehole (10) for connecting a compressed air source is provided in the housing lid (4) coaxially with the outlet (9).

9. Separating device (1) according to one of the preceding claims, **characterized in that** the channel-forming side walls (22, 23) of the recess (17) and of the clamping element (20) each have, at their ends (25, 26) near the lid (4), a bevel running radially to the channel longitudinal axis and forming a cone.

10. Separating device (1) according to one of the preceding claims, **characterized in that** a side wall (21) of the clamping element (20), which extends perpendicular to the channel-forming side wall (23) of the clamping element (20) and points towards the lid (4), comprises a bevelled edge (27) pointing towards the opening (7).

11. Arrangement comprising a separating device (1), a processing device for processing the joining elements (33) separated by the separating device (1), and a feeding device for feeding a plurality of joining elements (33) to the separating device (1), the separating device (1), processing device and feeding device being connected to one another via transport elements (8) for transporting the joining elements (33).

12. Arrangement according to claim 11, **characterized in that** the arrangement comprises a linear drive (12) connected to at least one sliding element (14, 15), which causes a linear movement of at least one sliding element (14, 15).

13. Arrangement according to claim 11 or 12, **characterized in that** the opening (7) of the separating device (1) extends over the height of a side wall and into a bottom (6) of the housing (2), so that there is no bottom (6) in the housing (2) below a transport element (8) coming from the feeding device and opening into the opening (7).

14. Method for separating joining elements (33), in which a first and a second sliding element (14, 15) form a channel (24), of which at least an upper part is accessible via an opening (7) for joining elements (33) in start positions of the sliding elements (14, 15), several joining elements (33) arranged one behind the other are presented at the opening (7),
a joining element (33) is moved into the upper part of the channel (24), both sliding elements (14, 15) are moved from their start positions in a linear motion to their end positions, in which the channel (24) is positioned above an outlet (9), so that the joining element (33) falls through the channel into the outlet.

15. Method according to claim 14, **characterized in that** compressed air is blown into the channel (24) when the sliding elements (14, 15) are in their start position.
